(19) Europäisches Patentamt

European Patent Office

Office européen des brevets

(11) **EP 1 335 846 B1**

(12) **EUROPÄISCHE PATENTSCHRIFT**

(45) Veröffentlichungstag und Bekanntmachung des Hinweises auf die Patenterteilung:
**11.01.2006 Patentblatt 2006/02**

(21) Anmeldenummer: **01997426.0**

(22) Anmeldetag: **20.11.2001**

(51) Int Cl.:
**B60T 7/12** *(2006.01)*

(86) Internationale Anmeldenummer:
**PCT/EP2001/013432**

(87) Internationale Veröffentlichungsnummer:
**WO 2002/042132 (30.05.2002 Gazette 2002/22)**

(54) **VERFAHREN UND VORRICHTUNG ZUM ERKENNEN EINES STILLSTANDZUSTANDES EINES KRAFTFAHRZEUGES**

METHOD AND DEVICE FOR RECOGNIZING WHEN A VEHICLE IS STOPPED

PROCEDE ET DISPOSITIF POUR RECONNAITRE LORSQU'UN VEHICULE EST A L'ARRET

(84) Benannte Vertragsstaaten:
**AT BE CH CY DE DK ES FI FR GB GR IE IT LI LU MC NL PT SE TR**

(30) Priorität: **23.11.2000 DE 10058071**

(43) Veröffentlichungstag der Anmeldung:
**20.08.2003 Patentblatt 2003/34**

(73) Patentinhaber: **Lucas Automotive GmbH**
**56070 Koblenz (DE)**

(72) Erfinder: **ENDRES, Franz-Josef**
**56244 Sessenhausen (DE)**

(74) Vertreter: **Schmidt, Steffen J.**
**Wuesthoff & Wuesthoff,**
**Patent- und Rechtsanwälte,**
**Schweigerstrasse 2**
**81541 München (DE)**

(56) Entgegenhaltungen:
**EP-A- 0 812 747          DE-A- 19 503 270**
**FR-A- 2 713 573          US-A- 5 820 515**

## Beschreibung

### Gebiet der Erfindung

Die vorliegende Erfindung betrifft ein Verfahren und eine Vorrichtung, mit denen erkannt wird, ob sich ein Kraftfahrzeug im Stillstand befindet oder nicht. Insbesondere betrifft die vorliegende Erfindung ein Verfahren und eine Vorrichtung zur Stillstandserkennung eines Kraftfahrzeuges anhand von Neigungsänderungen, wie z.B. Nickbewegungen, des Kraftfahrzeuges. Ferner betrifft die vorliegende Erfindung Bremsausrüstungen für Kraftfahrzeuge und Verfahren zum Betreiben derselben, bei denen bei erkannten Stillstandszuständen von Kraftfahrzeugen Bremskräfte erzeugt werden.

### Hintergrund der Erfindung

Zum Betrieb vieler elektrisch und elektronisch gesteuerter Einrichtungen eines Kraftfahrzeuges ist es erforderlich, aktuelle Betriebszustände eines Kraftfahrzeuges zu ermitteln, um solche elektrisch und elektronisch gesteuerten Einrichtungen entsprechend anzusteuern. So ist es beispielsweise bei Kraftfahrzeugen mit Bremsausrüstungen, die in einem Stillstandszustand des Kraftfahrzeuges automatisch Bremskräfte erzeugen, die das Kraftfahrzeug im Stillstand halten, erforderlich, festzustellen, ob sich das Kraftfahrzeug im Stillstand befindet oder nicht. Beispiele für derartige Bremsausrüstungen sind sogenannte elektronische Parkbremsen (EPB) und elektronische Feststellbremsen (EFB).

Da auch andere elektrische und elektronische Einrichtungen des Kraftfahrzeuges Informationen über aktuelle Betriebszustände des Kraftfahrzeuges (z.B. Fahrbetrieb, Stillstand) benötigen, wird üblicherweise beim Betrieb der genannten Bremsausrüstungen auf diese Informationen zurückgegriffen. Die Betriebszustandsinformationen umfassen Parameter, die den aktuellen Betriebszustand des Fahrzeuges charakterisieren. Hierzu zählen die Geschwindigkeit, die Beschleunigung, die Querbeschleunigung, die Motordrehzahl, das wirksame Antriebsmoment, die Drehzahl eines oder mehrerer Räder, Stellungen der Gas-, Brems- und Kupplungspedale und dergleichen.

Da solche Betriebszustandsinformationen im allgemeinen von einer zentralen Steuerung des Kraftfahrzeuges bereitgestellt werden, ist es bei der Verwendung dieser Informationen für eine Bremsausrüstung, die das Kraftfahrzeug unter Verwendung selbständig erzeugter Bremskräfte in einem Stillstandszustand halten soll, erforderlich, die zentrale Steuerung und dieser zugeordnete Sensoren auch zu betreiben, wenn das Kraftfahrzeug nicht betrieben wird (d.h. dessen Zündung nicht eingeschaltet ist). Dies führt zu einem erhöhten Energieverbrauch, der insbesondere bei längeren Stillstandszeiten zu einer Entladung der Energieversorgung des Kraftfahrzeuges (Autobatterie) führen kann, die eine Inbetriebnahme des Kraftfahrzeuges verhindert. Des weiteren sollten bei dieser Vorgehensweise Einrichtungen, die von der zentralen Steuerung gesteuert werden, während eines Stillstandes des Kraftfahrzeuges nicht betrieben werden, obwohl sich die zentrale Steuerung zur Steuerung der Bremsausrüstung im Betrieb befindet. Derartige Maßnahmen, die zusätzlichen Energieverbrauch sowie Verschleiß und Beschädigungen verhindern sollen, stellen einen zusätzlichen Aufwand dar.

Außerdem kann hierbei die Bremsausrüstung nicht zur Erzeugung von Bremskräften im Stillstandszustand des Kraftfahrzeuges gesteuert werden, wenn die zentrale Steuerung, entsprechende mit dieser verbundene Sensoren und/oder Datenübertragungseinrichtungen zu der Bremsausrüstung nicht fehlerfrei arbeiten oder vollständig ausfallen.

### Stand der Technik

Gemäß der DE 36 18 532 A1 wird der Stillstand eines Kraftfahrzeuges ermittelt, indem überprüft wird, ob die aktuelle Fahrgeschwindigkeit Null beträgt, die Kupplung gelöst ist, der erste oder der Rückwärtsgang eingelegt ist und der aktuelle Neigungswinkel des Kraftfahrzeuges einem vorbestimmten Neigungswinkel entspricht oder größer als dieser ist. Sind diese Bedingungen erfüllt, wird mittels eines Ventiles, das zwischen dem Hauptbremszylinder und den Radbremszylindern der dort beschriebenen Bremsanlage angeordnet ist, der Bremsbetätigungsdruck aufrechterhalten, der zu diesem Zeitpunkt mittels des Bremspedales durch den Fahrzeugführer vorgegeben wird. Nachteilig ist hierbei, daß ohne Betätigung des Bremspedales im Stillstand keine Bremskräfte erzeugt werden, wenn ein Übergang in den Stillstand ohne Verwendung des Bremspedales erfolgt ist. Des weiteren ist es mit der dort beschriebenen Vorrichtung nicht möglich, für einen Stillstand erforderliche Bremskräfte zu erzeugen, wenn das Kraftfahrzeug überhaupt nicht betrieben wird, d.h. wenn im Stillstand die Zündung ausgeschaltet ist. Dementsprechend ist es dort erforderlich, für einen Stillstand des Kraftfahrzeuges erforderliche Bremskräfte auf andere Weise zu erzeugen, beispielsweise durch Betätigung der Handbremse oder des Bremspedales.

Gemäß US-5,820,515 wird ein Stillstandszustand eines Kraftfahrzeugs erkannt, indem unter Verwendung von Detektiereinrichtungen überprüft wird, ob die Fahrzeuggeschwindigkeit im Wesentlichen 0 ist, ob das Gaspedal nicht betätigt ist und ob das Bremspedal betätigt ist. Ist dies der Fall, ergibt sich gemäß US-5,820,515 daraus, dass sich das Kraftfahrzeug in einem Stillstandszustand befindet. Danach wird ermittelt, ob sich das Fahrzeug auf einer geneigten Strasse befindet. Dabei werden keine Lageänderungen des Kraftfahrzeugs erfasst, sondern lediglich die Lage, in der sich das Fahrzeug im Stillstandszustand befindet. Ein weiterer Unterschied zu der vorliegenden Erfindung ergibt sich daraus, dass die Erfassung der Lage im Stillstandszustand nicht dazu verwendet wird, um festzustellen, ob sich das Fahrzeug im Stillstandszustand befindet. Vielmehr wird die Lageerfassung des Fahrzeugs erst dann ausgeführt, wenn bereits auf die oben genannte Weise festgestellt wurde, dass sich das Fahrzeug im stillstandszustand befindet.

Gemäß US-5,667,282 findet eine Erkennung eines Stillstandszustandes eines Fahrzeugs im eigentlichen Sinne nicht statt. Vielmehr wird gemäß US-5,667,282 der Stillstandszustand des Fahrzeugs angegeben, indem der Fahrer einen Parkbremsenschalter 30 betätigt. Erst nachdem der Stillstandszustand auf diese Weise angegeben ist, wird ein Neigungssensor aktiviert, der die Neigung des Fahrzeugs und damit die Neigung der Strasse angibt. Vergleichbar zu US-5,820,515 werden auch gemäß US-5,667,282 keine Neigungs- oder Lageänderungen des Fahrzeugs ermittelt, sondern lediglich die im Stillstandszustand vorliegende Neigung.

Aufgabe der Erfindung

Aufgabe der vorliegenden Erfindung ist es, ein Verfahren und eine Vorrichtung bereitzustellen, die es ermöglichen, unabhängig von einem Betrieb einer zentralen Steuerung eines Kraftfahrzeuges Stillstandszustände desselben zu erkennen. Auf diese Weise sollen der oben beschriebene erhöhte Energiebedarf im Stillstand des Kraftfahrzeuges und hinsichtlich im Stillstand nicht benötigter Einrichtungen des Kraftfahrzeuges erforderliche Maßnahmen vermieden sowie die Sicherheit beim Erkennen eines Stillstandszustandes erhöht werden. Insbesondere soll die vorliegende Erfindung ein Verfahren und eine Vorrichtung bereitstellen, die zur Steuerung einer Bremsausrüstung eines Kraftfahrzeuges dessen Stillstandszustände sicher detektieren.

## Kurzbeschreibung der Erfindung

Zur Lösung der zugrundeliegenden Aufgabe stellt die vorliegende Erfindung ein Verfahren und eine Vorrichtung zum Erkennen eines Stillstandszustandes eines Kraftfahrzeuges sowie eine Bremsausrüstung für ein Kraftfahrzeug und ein Verfahren zum Betreiben derselben bereit, bei denen Stillstandszustände eines Kraftfahrzeuges in erfindungsgemäßer weise erkannt werden.

Bei dem erfindungsgemäßen Verfahren zum Erkennen eines Stillstandszustandes eines Kraftfahrzeuges wird wenigstens ein Lageänderungsparameter festgelegt, der eine Lageänderung eines Kraftfahrzeuges definiert, die in einem Fahrzustand auftreten kann. Nachfolgend wird für jeden Betriebszustand des Kraftfahrzeuges, in dem eine Stillstanderkennung durchzuführen ist, eine aktuelle Lageänderung des Kraftfahrzeuges erfaßt und wenigstens ein aktueller Lageänderungsparameter ermittelt, der die erfaßte aktuelle Lageänderung definiert. Für die eigentliche Stillstanderkennung wird der wenigstens eine aktuelle Lageänderungsparameter mit dem wenigstens einen festgelegten Lageänderungsparameter verglichen, um zu bestimmen, ob der wenigstens eine aktuelle Lageänderungsparameter einen Fahrzustand für das Kraftfahrzeug angibt.

Wenn der wenigstens eine aktuelle Lageänderungsparameter einen Fahrzustand für das Kraftfahrzeug charakterisiert, wird ein Signal erzeugt, das angibt, daß sich das Kraftfahrzeug bewegt und nicht im Stillstand befindet. Demgegenüber wird ein Signal erzeugt, das einen Stillstandszustand für das Kraftfahrzeug charakterisiert, wenn der wenigstens eine aktuelle Lageänderungsparameter angibt, daß sich das Kraftfahrzeug im Stillstand befindet. In diesem Zusammenhang wird unter einem Stillstandszustand ein Zustand des Kraftfahrzeuges verstanden, in dem das Kraftfahrzeug keinen Fahrzustand aufweisen oder einnehmen soll.

Vorzugsweise wird beim Festlegen des wenigstens einen Lageänderungsparameters wenigstens ein Lageänderungsparameterbereich definiert, der Lageänderungen des Kraftfahrzeuges charakterisiert, die bei Fahrzuständen auftreten können. In diesem Fall wird der wenigstens eine aktuelle Lageänderungsparameter mit dem entsprechenden Lageänderungsparameterbereich oder einem entsprechenden der Lageänderungsparameterbereiche verglichen, um festzustellen, ob der wenigstens eine aktuelle Lageänderungsparameter in dem entsprechenden Lageänderungsparameterbereich liegt. Liegt der (die) aktuelle(n)) Lageänderungsparameter nicht in dem entsprechenden Lageänderungsparameterbereich, wird das Stillstandssignal erzeugt, während das Signal, das einen Fahrzustand für das Kraftfahrzeug angibt, erzeugt wird, wenn der (die) aktuelle(n) Lageänderungsparameter in den entsprechenden Lageänderungsparameterbereich fällt (fallen).

Bei einer bevorzugten Ausführungsform wird der wenigstens eine Lageänderungsparameter so festgelegt, daß er (sie) Neigungsänderungen des Kraftfahrzeuges um dessen Längs- und/oder Querachse definieren. Dementsprechend werden beim Erfassen der aktuellen Lageänderung des Kraftfahrzeuges aktuelle Neigungsänderungen erfaßt und mit den festgelegten Neigungsänderungen verglichen.

Ferner ist es vorgesehen, beim Erfassen der aktuellen Lageänderung des Kraftfahrzeuges ein aktuelles Lageänderungssignal zu erzeugen, vorzugsweise ein aktuelles Neigungsänderungssignal, das die aktuelle Lage- bzw. Neigungsänderung des Kraftfahrzeuges wiedergibt. In diesem Fall wird aus dem aktuellen Lageänderungssignal bzw.

aus dem aktuellen Neigungsänderungssignal der aktuelle Lageänderungsparameter ermittelt.

Um aus dem aktuellen Lageänderungssignal den wenigstens einen aktuellen Lageänderungsparameter zu ermitteln, kann das aktuelle Lageänderungssignal tiefpaßgefiltert oder hochpaßgefilter oder bandpaßgefiltert werden.

Anstelle einer Bandpaßfilterung kann das aktuelle Lageänderungssignal tiefpaßgefiltert und nachfolgend hochpaßgefiltert oder hochpaßgefiltert und nachfolgend tiefpaßgefiltert werden. Diese Vorgehensweise hat den Vorteil, daß für die Tiefpaßfilterung und die Hochpaßfilterung Filter unterschiedlicher Charakteristika verwendet werden können. So ist es beispielsweise möglich, unterschiedliche Abtastraten und Verstärkungsfaktoren für die Tiefpaß- und Hochpaßfilterung vorzugeben.

Alternativ oder ergänzend zu den genannten Filterungen des aktuellen Lageänderungssignales, kann das aktuelle Lageänderungssignal oder ein gefiltertes aktuelles Lageänderungssignal differentiell gefiltert werden. Für den durchzuführenden Vergleich sind dementsprechend geeignete(r) Lageänderungsparameter festzulegen. Hierbei ist es möglich, eine oder mehrere differentielle Größen als Lageänderungsparameter festzulegen, die zeitliche Änderungen von Lageänderungen des Kraftfahrzeuges definieren, die in einem Fahrzustand auftreten können. Ferner ist es vorgesehen, hierbei aus dem wenigstens einen festgelegten Lageänderungsparameter eine oder mehrere differentielle Größen zu ermitteln.

Vorzugsweise werden eine oder mehrere der oben genannten Filterungen rekursiv durchgeführt. Hierbei werden zum Ermitteln des aktuellen Lageänderungsparameters das (gefilterte) aktuelle Lageänderungssignal und ein zeitlich zuvor ermitteltes (gefiltertes) aktuelles Lageänderungssignal zugrundegelegt.

Die erfindungsgemäße Vorrichtung zum Erkennen eines Stillstandszustandes eines Kraftfahrzeuges weist eine Lageänderungserkennungseinrichtung und eine Rechnereinheit auf. Die Lageänderungserkennungseinrichtung dient zum Erfassen einer aktuellen Lageänderung eines Kraftfahrzeuges und zum Erzeugen eines entsprechenden Lageänderungssignales. Mit der Rechnereinheit wird das aktuelle Lageänderungssignal ausgewertet, indem aus dem aktuellen Lageänderungssignal wenigstens ein aktueller Lageänderungsparameter gewonnen und mit wenigstens einem vorab festgelegten Lageänderungsparameter verglichen, der Lageänderungen eines Kraftfahrzeuges definiert, die in einem Fahrzustand auftreten können. In Abhängigkeit dieses Vergleiches wird von der Rechnereinheit ein Signal erzeugt, das einen Stillstandszustand oder einen Fahrbetrieb für das Kraftfahrzeug wiedergibt.

Die Rechnereinheit erzeugt ein Stillstandssignal, wenn der wenigstens eine aktuelle Lageänderungsparameter verglichen mit dem wenigstens einen festgelegten Lageänderungsparameter angibt, daß sich das Kraftfahrzeug nicht in einem Fahrbetrieb befindet, sondern still steht. Demgegenüber gibt die Rechnereinheit ein Signal aus, das einen Fahrbetrieb des Kraftfahrzeuges charakterisiert, wenn der Vergleich der Lageänderungsparameter ergibt, daß sich das Kraftfahrzeug in einem Fahrbetrieb befindet.

Vorzugsweise umfaßt die Lageänderungserkennungseinrichtung einen Neigungssensor, mit dem Neigungsänderungen des Kraftfahrzeuges um dessen Längs- und/oder Querachse erfaßt werden. In diesem Fall wird von der Lageänderungserkennungseinrichtung ein aktuelles Neigungsänderungssignal erzeugt.

Ferner ist es vorgesehen, daß die Rechnereinheit einen Bandpaß aufweist, der das aktuelle Lageänderungssignal filtert. Anstelle des Bandpasses kann die Rechnereinheit einen das aktuelle Lageänderungssignal empfangenden Tiefpaß und einen ein tiefpaßgefiltertes Signal des Tiefpasses empfangenden Hochpaß oder einen das aktuelle Lageänderungssignal empfangenden Hochpaß und ein gefiltertes Signal des Hochpasses empfangenden Tiefpaß aufweisen.

In Abhängigkeit der Anwendung der erfindungsgemäßen Vorrichtung, kann die Rechnereinheit auch nur einen Hochpaßfilter oder einen Tiefpaßfilter umfassen.

Bei weiteren Ausführungsformen der erfindungsgemäßen Vorrichtung kann die Rechnereinheit einen differentiellen Filter aufweisen, der das aktuelle Lageänderungssignal oder eines der von dem Bandpaß oder dem Tiefpaß- und/oder Hochpaßfilter gefiltertes Signal differentiell filtert.

Bei Verwendung eines Hochpaßfilters und eines Tiefpaßfilters ist es zu bevorzugen, daß für diese unterschiedliche Abtastraten und/oder Verstärkungsfaktoren gewählt werden.

Außerdem stellt die vorliegende Erfindung ein Verfahren zum Betrieb einer Bremsausrüstung eines Kraftfahrzeuges bereit, die bei einem Stillstandszustand für das Kraftfahrzeug selbständig Bremskräfte erzeugt, die das Kraftfahrzeug im Stillstand halten. Um zu erkennen, ob sich das Kraftfahrzeug im Stillstand befindet oder nicht, wird eines der zuvor beschriebenen erfindungsgemäßen Verfahren zur Stillstanderkennung verwendet.

Bei der erfindungsgemäßen Bremsausrüstung für ein Kraftfahrzeug, die für einen Stillstandszustand in diesem erforderliche Bremskräfte automatisch bereitstellt, wird für die hierfür erforderliche Stillstanderkennung eine der oben beschriebenen erfindungsgemäßen Vorrichtungen verwendet.

## Kurzbeschreibung der Figuren

In der folgenden Beschreibung wird auf die beigefügten Figuren Bezug genommen, von denen zeigen:

Fig. 1    eine schematische Darstellung eines Kraftfahrzeuges mit einer erfindungsgemäßen Vorrichtung zur Stillstandserkennung,

Fig. 2    eine Ausführungsform einer erfindungsgemäßen Vorrichtung zur Stillstandserkennung mit einem Bandpaßfilter,

Fig. 3    eine Ausführungsform einer erfindungsgemäßen Vorrichtung zur Stillstandserkennung mit einem Tiefpaßfilter und einem Hochpaßfilter,

Fig. 4    eine Ausführungsform einer erfindungsgemäßen Vorrichtung zur Stillstandserkennung mit einem Bandpaßfilter und einem differentiellen Filter, und

Fig. 5    eine Ausführungsform einer erfindungsgemäßen Vorrichtung zur Stillstandserkennung mit Tiefpaß- und Hochpaßfiltern und einem differentiellen Filter.

## Beschreibung bevorzugter Ausführungsformen

Im allgemeinen weist ein Kraftfahrzeug in Fahrbetrieb, d.h. bei einer Fahrzeuggeschwindigkeit ungleich Null, für den Fahrbetrieb charakteristische dynamische Bewegungen um dessen Querachse und dessen Längsachse auf. Folglich kann nicht nur festgestellt werden, ob sich ein Kraftfahrzeug im Stillstand befindet oder nicht, wenn das Kraftfahrzeug keinerlei Bewegungen aufweist, sondern auch dann, wenn Bewegungen des Kraftfahrzeuges nicht den für den Fahrbetrieb typischen Bewegungen entsprechen.

Würde bei einer Stillstandserkennung für ein Kraftfahrzeug ein Stillstand nur dann erkannt werden, wenn das Kraftfahrzeug keinerlei Bewegungen aufweist, könnten Stillstandszustände für das Kraftfahrzeug nicht erkannt werden, wenn sich das Kraftfahrzeug aufgrund äußerer Einflüsse bewegt, obwohl es sich nicht in einem Fahrbetrieb befindet. Dies ist beispielsweise der Fall, wenn Kraftfahrzeuge mittels eines Lastkraftwagens, eines Schiffes oder eines Eisenbahnzuges transportiert werden.

Insbesondere.bei einer Verwendung einer Stillstandserkennung zum Betrieb einer Bremsausrüstung eines Kraftfahrzeuges, die das Kraftfahrzeug durch selbständige Erzeugung entsprechender Bremskräfte im Stillstand halten soll, kann dies dazu führen, daß erfaßte Fahrzeugbewegungen, die nicht durch einen Fahrbetrieb verursacht werden, dahingehend ausgelegt werden, daß sich das Kraftfahrzeug nicht im Stillstand befindet. Dementsprechend würde die Bremsausrüstung deaktiviert, wodurch die für einen Stillstandszustand erforderlichen Bremskräfte nicht mehr erzeugt würden. In der Folge kann das Kraftfahrzeug sich selbständig in Bewegung setzen und beispielsweise während eines Transportes wegrollen.

Dies wird vermieden, indem in Abhängigkeit von dynamischen Bewegungen, die durch einen Fahrbetrieb verursacht werden können, erfaßte Fahrzeugbewegungen ausgewertet werden. Liegen die erfaßten Fahrzeugbewegungen in einem Bereich, in dem typische Fahrzeugbewegungen für einen Fahrbetrieb liegen können, ist davon auszugehen, daß sich das Kraftfahrzeug nicht im Stillstand befindet. Demgegenüber kann festgestellt werden, daß sich das Kraftfahrzeug im Stillstand befindet, wenn die erfaßten Fahrzeugbewegungen nicht in dem Bereich der fahrtypischen Bewegungen liegen.

Je nach Typ des Kraftfahrzeuges unterscheiden sich die durch einen Fahrbetrieb verursachten Bewegungen in den Frequenzen, den Amplituden und den Richtungen bezüglich der Längs- und Querachsen eines Kraftfahrzeuges. Dementsprechend können für einen Fahrbetrieb typische Bewegungen eines Kraftfahrzeuges über deren Frequenzen, deren Amplituden und deren Richtungen charakterisiert werden.

Bei einer Definition von Frequenzen und Amplituden von für einen Fahrbetrieb typischen Bewegungen sollten Frequenz- und/oder Amplitudenbereiche festgelegt werden. Eine Definition von Grenzfrequenzen und/oder Grenzamplituden für typische Fahrbewegungen eines Kraftfahrzeuges führt dazu, daß ermittelte Fahrzeugbewegungen, deren Frequenzen und/oder Amplituden den entsprechenden Grenzwert überschreiten, als Fahrbewegungen interpretiert werden. Folglich würde bei einer Stillstandserkennung für ein Kraftfahrzeug, bei der Fahrzeugbewegungen auf diese Weise ausgewertet werden, dazu führen, daß erfaßte Fahrzeugbewegungen, die durch äußere Einflüsse erzeugt werden und für einen Fahrbetrieb nicht typisch sind, einen tatsächlich nicht vorliegenden Fahrbetrieb angeben. Ein Beispiel hierfür ist der Transport von Kraftfahrzeugen mit einem Eisenbahnzug, bei dem hochfrequente Bewegungskomponenten für das Kraftfahrzeug auftreten können, oder auf einem Schiff, der Fahrzeugbewegungen großer Amplituden verursachen kann.

Bei einer Festlegung von Frequenz- und/oder Amplitudenbereichen von für einen Fahrbetrieb typischen Fahrzeugbewegungen sind insbesondere auch Fahrzeugbewegungen zu berücksichtigen, die während eines normalen Fahrbetriebes selten auftreten. Beispiele hierfür sind Fahrzustände, bei denen ein Kraftfahrzeug stark abgebremst (Notbremsung, Vollbremsung) und stark beschleunigt (Kavalierstart) wird. Ferner zählen hierzu Fahrzustände, bei denen das Kraftfahrzeug gezielt untypisch bewegt wird, wie z.B. beim Versuch ein im Schnee oder in einem weichen Untergrund festgefahrenes Kraftfahrzeug anzufahren.

Auch in diesen Fällen ist es zu vermeiden, daß bei einer Verwendung einer Stillstandserkennung für den Betrieb einer im Stillstand automatisch aktivierten Bremsausrüstung eines Kraftfahrzeuges dieses in solchen Fahrzuständen aktiviert wird oder bleibt. Folglich kann es erforderlich sein, mehrere Frequenz- und/oder Amplitudenbereiche für Fahrzeugbewegungen im Fahrbetrieb festzulegen.

Die zuvor ausgeführten Überlegungen sind auch bei einer Definition von Bewegungsrichtungen und/oder Bewegungsrichtungsbereichen bezüglich von Kraftfahrzeuglängs- und -querachsen zu berücksichtigen.

Bei der folgenden Beschreibung wird von einem Kraftfahrzeugtyp ausgegangen, der während eines üblichen Fahrbetriebes dynamische Bewegungen um die Fahrzeugquerachse mit einer Frequenz von ca. 1 Hz aufweist. Ferner können bei diesem Kraftfahrzeugtyp dynamische Bewegungen um dessen Querachse für selten auftretende Fahrzustände mit einer Frequenz bis zu 4 Hz auftreten. Der Einfachheit halber werden bei der folgenden Erläuterung einer Stillstandserkennung Bewegungen dieses Kraftfahrzeugtyps um dessen Längsachse nicht berücksichtigt, auch wenn es vorgesehen ist, Bewegungen um die Längsachse zur Stillstandserkennung zu verwenden.

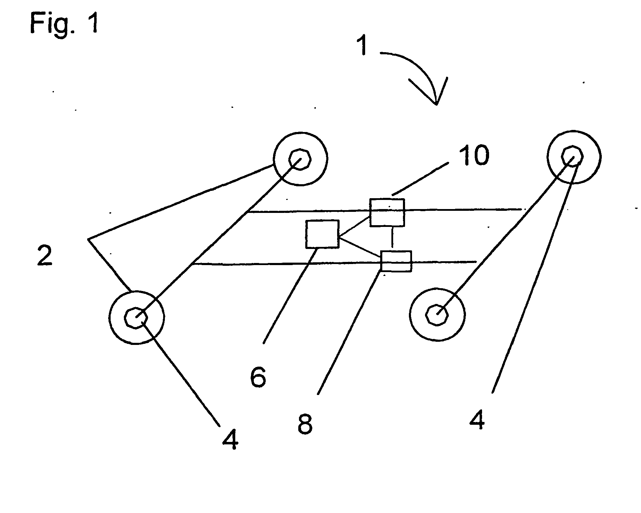

Wie in Fig. 1 dargestellt, weist ein im allgemeinen mit 1 bezeichnetes Kraftfahrzeug Rädern 2 zugeordnete Bremsen 4 auf. Die Bremsen 4 werden mittels einer Steuereinheit 6 so gesteuert, daß sie neben einem herkömmlichen Bremsbetrieb für Fahrzustände des Kraftfahrzeuges 1 auch Bremskräfte erzeugen, wenn sich das Kraftfahrzeug 1 im Stillstand befindet, die erforderlich sind, um das Kraftfahrzeug 1 im Stillstand zu halten. Hierbei können zum Beibehalten des Stillstandszustandes einzelne oder mehrere der Bremsen 4 durch die Steuereinheit 6 aktiviert werden.

Um festzustellen, ob sich das Kraftfahrzeug 1 im Stillstand befindet oder nicht, wird ein der Steuereinheit 6 zugeordneter Neigungssensor 8 verwendet. Anstelle des Neigungssensors 8 können auch mehrere in unterschiedlichen Bereichen des Kraftfahrzeuges 1 angeordnete Neigungssensoren oder Sensoren verwendet werden, die geeignet sind, um Fahrzeugbewegungen und/oder Änderungen von Fahrzeugbewegungen zu detektieren.

Hierbei kann der Neigungssensor 8 (oder vergleichbare geeignete Einrichtungen) kontinuierlich, zu vorgegebenen Zeitpunkten oder während vorgegebener Zeitperioden betrieben werden. Insbesondere bei einem elektrisch/elektronisch betriebenen/gesteuerten Neigungssensor 8 ist darauf zu achten, daß dessen Abtastfrequenz in Abhängigkeit des festgelegten Frequenzbereiches für Fahrzeugbewegungen in Fahrzuständen das Nyquist-Kriterium erfüllt.

Zur Auswertung von Signalen des Neigungssensors 8, die eine aktuelle Neigung des Kraftfahrzeuges 1 angeben, wird eine Rechnereinheit 10 verwendet, die baueinheitlich in die Steuereinheit 6 integriert oder separat von dieser ausgeführt sein kann. Es ist auch möglich, die im folgenden beschriebene Funktion der Rechnereinheit 10 durch die Steuereinheit 6 bereitzustellen.

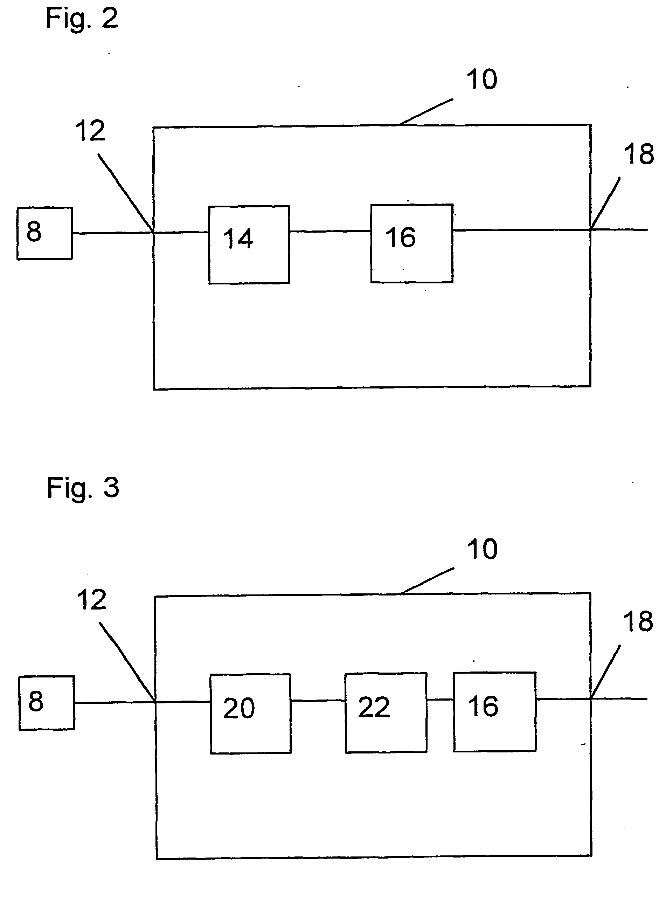

Bei der in Fig. 2 gezeigten Ausführungsform der Rechnereinheit 10 ist diese über einen Eingang 12 mit dem Neigungssensor 8 verbunden, um dessen die aktuelle Kraftfahrzeugneigung angebendes Signal Inc_act zu empfangen.

Das empfangene Signal Inc_act (i.e. die aktuelle Neigung) wird mittels eines Bandpasses 14 so gefiltert, daß der Bandpaß 14 ein Signal Inc_f_bp (i.e. bandpaßgefilterte Neigung im Frequenzbereich) ausgibt, das nur Frequenzkomponenten des Signales Inc_act des Neigungssensors 8 umfassen kann, die in dem für Fahrzeugbewegungen im Fahrbetrieb definierten Frequenzbereich liegen. Ausgehend von den oben erläuterten Voraussetzungen, liegt die untere Grenzfrequenz des Bandpaß 14 etwas unterhalb von 1 Hz, während die obere Grenzfrequenz des Bandpasses 14 etwa 4 Hz beträgt.

Das gefilterte Signal Inc_f_bp wird an eine Auswerteeinrichtung 16 übertragen, die feststellt, ob das Signal Inc_f_bp des Bandpasses 14 Frequenzen in dem Bereich zwischen etwa 1 Hz und 4 Hz aufweist. Werden keine Frequenzkomponenten in dem Signal Inc_f_bp detektiert, die in diesem Frequenzbereich liegen, gibt die Auswerteeinrichtung ein Signal stat_con (i.e. Stillstandszustand) aus, das angibt, daß sich das Kraftfahrzeug 1 im Stillstand befindet. Das Signal Stat_con wird über einen Ausgang 18 der Rechnereinheit 10 zu der Steuereinheit 6 übertragen.

In Antwort auf das Signal Stat_con steuert die Steuereinheit 6 die Bremsen 4 so an, daß diese für den Stillstand erforderliche Bremskräfte erzeugen.

Bei der in Fig. 3 dargestellten Ausführungsform der Rechnereinheit 10 wird anstelle des Bandpasses 14 ein mit dem Eingang 12 verbundener Tiefpaß 2o und ein mit diesem verbundener Hochpaß 22 verwendet.

Der Tiefpaß 20 empfängt das Signal Inc_act des Neigungssensors 8 und gibt aufgrund einer oberen Grenzfrequenz von etwa 4 Hz ein Signal Inc_f_tp (i.e. tiefpaßgefilterte Neigung im Frequenzbereich) aus, das nur Frequenzkomponenten unterhalb von 4 Hz aufweisen kann. Das von dem Hochpaß 22 empfangene Signal Inc_f_tp wird bei einer unteren Grenzfrequenz von etwa 1 Hz gefiltert, um ein hochpaßgefiltertes Signal Inc_f_hp (i.e. hochpaßgefilterte Neigung im Frequenzbereich) auszugeben, das nur Frequenzkomponenten in dem für Fahrbewegungen im Fahrbetrieb definierten Frequenzbereich zwischen etwa 1 Hz und 4 Hz aufweisen kann.

Wie unter Bezugnahme auf Fig. 2 erläutert, wertet die Auswerteeinrichtung 16 das Signal Inc_f_hp aus, um das einen Stillstand des Kraftfahrzeuges 1 angebende Signal Stat_con zu erzeugen, wenn das Signal Inc_f_hp im wesentlichen keine Amplituden aufweist.

Werden in dem Signal Inc_f_hp bzw. in dem Signal Inc_f_bp Amplituden detektiert, die im wesentlichen nicht Null sind, wird das einen Stillstand angebende Signal Stat_con nicht erzeugt. Das Fehlen dieses Signales gibt der Steuereinheit 6 an, daß sich das Kraftfahrzeug 1 nicht im Stillstand, sondern in einem Fahrzustand befindet. Es ist auch vorgesehen, daß hierbei von der Auswerteeinrichtung 16 ein Signal Dyn_con (i.e.

Fahrbetrieb) erzeugt wird, das einen Fahrbetrieb für das Kraftfahrzeug 1 angibt.

Die Verwendung des Tiefpasses 20 und des Hochpasses 22 anstelle des Bandpasses 14 hat den Vorteil, daß für den Tiefpaß 20 und den Hochpaß 22 unterschiedliche Abtastraten verwendet werden können. So hat sich bei experimentellen Überprüfungen des oben genannten Kraftfahrzeugtyps gezeigt, daß die besten Ergebnisse erreicht werden, wenn der Tiefpaß 20 mit einer Abtastrate von 200 Hz (Abtastzyklus 5 mS) und der Hochpaß 22 mit einer Abtastrate von 10 Hz (Abtastzyklus 100 mS) betrieben wird. Des weiteren ist es bei der Verwendung des Tiefpasses 20 und des Hochpasses 22 möglich, für diese Filter unterschiedliche Verstärkungsfaktoren vorzugeben. Hierbei konnten besonders gute Ergebnisse erreicht werden, wenn für den Hochpaß 22 ein Verstärkungsfaktor von 60 vorgegeben wird.

Ein weiterer Vorteil bei der Ausführungsform gemäß Fig. 3 besteht darin, daß die Filterfunktionen für den Tiefpaß 20 und den Hochpaß 22 separat definiert werden können, um die Frequenzkomponenten des Signales Inc_act des Neigungssensors 8 hinsichtlich ihrer Bedeutung für eine Stillstanderkennung zu gewichten.

So wird bei einer Ausführungsform des Tiefpasses 20 ein Bandbegrenzungsfilter (Anti-Aliasing-Filter) zur Filterung des Signales Inc_act verwendet, der durch folgende Gleichung beschrieben wird:

$$\texttt{Inc\_f\_tp = (1 - exp(-T}_A\texttt{/T)) x (Inc\_act-Inc\_f\_tp}_{-1}\texttt{) x Inc\_f\_tp}_{-1}$$

Bei dieser einen rekursiven Filter beschreibenden Funktion wird ein aktuelles tiefpaßgefiltertes Signal Inc_f_tp unter Verwendung eines zuvor tiefpaßgefilterten Signales Inc_f_tp$_{-1}$ berechnet. Hierbei gibt TA den Abtastzyklus (z.B. 5 mS) an, während T dem Kehrwert der oberen Grenzfrequenz (z.B. etwa 4 Hz) des Tiefpasses 20 entspricht.

Das auf diese Weise erhaltene Signal Inc_f_tp wird von dem Hochpaß 22 gefiltert, der bei dieser Ausführungsform durch folgende Gleichung beschrieben wird:

$$\texttt{Inc\_f\_hp = K} \cdot \texttt{(Inc\_f\_tp-Inc\_f\_tp}_{-1}\texttt{) + exp (-T}_A\texttt{/T)} \cdot \texttt{Inc\_f\_hp}_{-1}.$$

Der Hochpaß 22 ist in diesem Fall ebenfalls ein rekursiver Filter, der das aktuelle Signal Inc_f_hp unter Verwendung eines zuvor ermittelten hochpaßgefilterten Signales Inc_f_hp$_{-1}$ berechnet. Hierbei gibt der Parameter TA den Abtastzyklus (z.B. 100 mS) für den Hochpaß 22 an, während T der unteren Grenzfrequenz (z.B. etwa 1 Hz) des Hochpasses 22 entspricht. Wie oben ausgeführt, wird bei dem Hochpaß 22 im Vergleich zu dem Tiefpaß 20 ein Verstärkungsfaktor verwendet, der durch den Parameter K (z.B. 60) wiedergegeben wird.

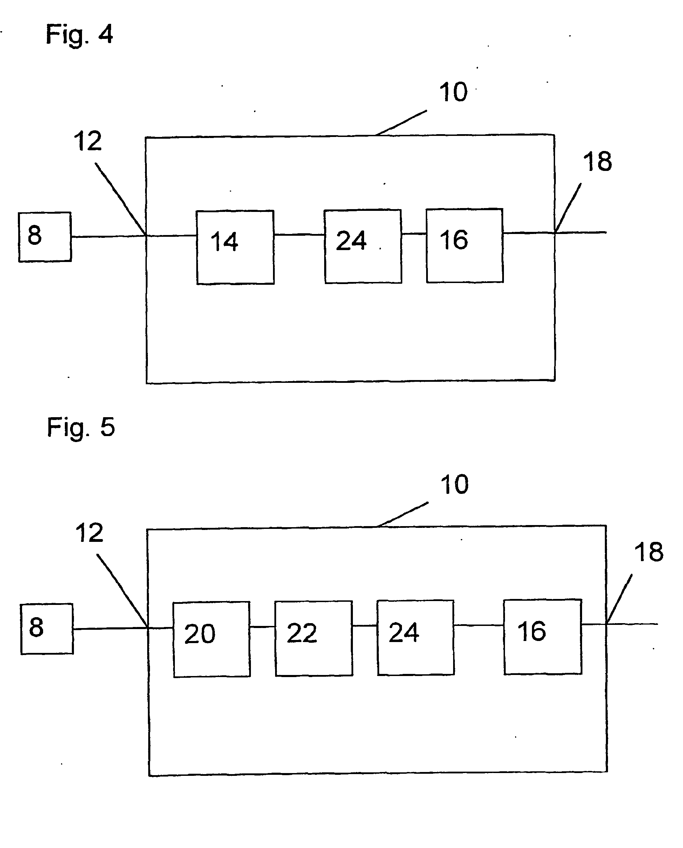

Ergänzend zu der Ausführungsform gemäß Fig. 2 umfaßt die in Fig. 4 gezeigte Ausführungsform der Rechnereinheit 10 einen zwischen dem Bandpaß 14 und dem Auswerteeinrichtung 16 angeordneten Filter 24. Der Filter 24 ist ein differentieller Filter, der verhindern soll, daß Frequenzkomponenten des Signales Inc_f_bp in dem für Fahrzeugbewegungen im Fahrbetrieb definierten Frequenzbereich zwischen etwa 1 Hz und 4 Hz, die nicht durch einen Fahrbetrieb, sondern beispielsweise von in einem Stillstandszustand auftretenden Bewegungen hervorgerufenen Bewegungen/Schwingungen des Kraftfahrzeuges 1 verursacht werden, von der Auswerteeinrichtung 16 fälschlicherweise als Fahrbetriebsbewegungen detektiert werden.

Mittels des Filter 24 werden aus dem Signal Inc_f_bp des Bandpasses 14 Bewegungsänderungen, genauer Neigungsänderungen, für das Kraftfahrzeug 1 ermittelt. Ein von dem Filter 24 ausgegebenes differentiell gefiltertes Signal Inc_f_abs (i.e. differenzierte bandpaßgefilterte Neigung im Frequenzbereich) wird von der Auswerteeinrichtung 16 dahingehend überprüft, ob dieses Signal einen vorgegebenen Grenzwert überschreitet oder unterschreitet oder innerhalb oder außerhalb eines vorgegebenen Bereiches liegt.

Vergleichbar zu Fig. 4 weist die in Fig. 5 dargestellte Ausführungsform der Rechnereinheit 10 die Komponenten gemäß Fig. 3 und den Filter 24 auf. Bei dem hier zugrundeliegenden Kraftfahrzeugtyp wurde in Kombination mit dem durch die obigen Gleichungen beschriebenen Tiefpaß- und Hochpaßfiltern für den Filter 24 ein differentieller Filter verwendet, der durch die folgenden Gleichungen beschrieben wird:

*für inc_f_abs≤0*: Inc_f_abs = 0
*für 0<inc_f_bs<X:* Inc_f_abs = inc_f_abs+|Inc_f_hp_Inc_f_hp $_{-1}$|-D
*für X≤inc_f_abs*: Inc_f_abs = X

In diesen Gleichungen gibt die Größe inc_f_abs das differenzierte Signal Inc_f_hp im Frequenzbereich an. Der Parameter D ist ein Korrekturwert, und der Parameter X gibt einen oberen Grenzwert an.

Das von dem Filter 24 ausgegebene Signal Inc_f_abs hat den Wert 0, wenn das Kraftfahrzeug 1 keinerlei Bewegungsänderungen bzw. Neigungsänderungen zeigt. Demgegenüber wird der Wert X ausgegeben, wenn eine aktuelle Bewegungsänderung bzw. Neigungsänderung des Kraftfahrzeuges 1 den durch X definierten Grenzwert überschreitet. Für Bewegungsänderungen bzw. Neigungsänderungen des Kraftfahrzeuges 1 zwischen dem Wert 0 und dem Grenzwert X ergibt sich das Signal Inc_f_abs aus dem entsprechenden Signal Inc_f_abs klein dem aktuellen Signal Inc_f_hp, dem zuvor ermittelten Signal Inc_f_hp$_{-1}$ und dem Korrekturwert D.

Im letzteren Fall werden mit dem Neigungssensor 8 Fahrzeugbewegungen detektiert und ein entsprechendes Signal Inc_act ausgegeben, wobei die hier detektierten Bewegungen im allgemeinen nicht durch einen Fahrbetrieb des Kraftfahrzeuges 1 verursacht werden. Das entsprechend erzeugte Signal Inc_f_abs wird an die Steuereinheit 6 übertragen, um dieser anzugeben, daß zwar Bewegungen (-änderungen) bzw. Neigungen (-änderungen) für das Kraftfahrzeug 1 ermittelt wurden, diese aber nicht für einen Fahrbetrieb typischen Bewegungen entsprechen. In Abhängigkeit der Ausführung der Steuereinheit 6 und/oder damit verwendeter Steuereinrichtungen für das Kraftfahrzeug 1 kann in diesem Fall das Signal Inc_f_abs verwendet werden, um, falls erforderlich und/oder vorgesehen, zu bestimmen, ob sich das Kraftfahrzeug im Stillstand befindet oder nicht.

Hat das Signal Inc_f_abs den Wert 0, befindet sich das Kraftfahrzeug 1 im Stillstand und die Steuereinheit 6 aktiviert dementsprechend die Bremsen 4 oder hält deren Aktivierungszustand aufrecht. Demgegenüber deaktiviert die Steuereinheit 6 die Bremsen 4, wenn das Signal Inc_f_abs dem Grenzwert X entspricht.

**Patentansprüche**

1.    Verfahren zum Erkennen eines Stillstandszustandes eines Kraftfahrzeuges, mit folgenden Schritten:

- Festlegen wenigstens eines Lageänderungsparameters, der eine Lageänderung eines Kraftfahrzeuges (1) definiert, die in einem Fahrzustand auftreten kann,
- Erfassen einer aktuellen Lageänderung des Kraftfahrzeuges (1),
- Ermitteln wenigstens eines aktuellen Lageänderungsparameters (Inc_act), der die aktuelle Lageänderung charakterisiert,
- Vergleichen des wenigstens einen aktuellen Lageänderungsparameters (Inc_act) mit einem entsprechenden der wenigstens einen festgelegten Lageänderungsparameter, um zu bestimmen, ob der wenigstens eine aktuelle Lageänderungsparameter (Inc_act) einen Fahrzustand für das Kraftfahrzeug (1) charakterisiert, und
- Erzeugen eines Signales (Dyn_con), das einen Fahrzustand für das Kraftfahrzeug (1) wiedergibt, wenn der wenigstens eine aktuelle Lageänderungsparameter (Inc_act) einen Fahrzustand charakterisiert, oder eines Signales (Stat_con), das einen Stillstandszustand für das Kraftfahrzeug (1) wiedergibt, wenn der wenigstens eine aktuelle Lageänderungsparameter (Inc_act) einen Zustand des Kraftfahrzeuges (1) charakterisiert, der kein Fahrzustand ist.

2.    Verfahren gemäß Anspruch 1, bei dem

- beim Festlegen des wenigstens einen Lageänderungsparameters wenigstens ein Lageänderungsparameterbereich festgelegt wird, und
- beim Vergleichen des wenigstens einen aktuellen Lageänderungsparameters (Inc_act) überprüft wird, ob der aktuelle Lageänderungsparameter (Inc_act) in einem entsprechenden der wenigstens einen festgelegten Lageänderungsparameterbereiche liegt.

3.    Verfahren gemäß Anspruch 1 oder 2, bei dem

- der wenigstens eine festgelegte Lageänderungsparameter Neigungsänderungen des Kraftfahrzeuges (1) um dessen Längs- und/oder Querachsen definiert, und
- der wenigstens eine aktuelle Lageänderungsparameter (Inc_act) eine aktuelle Neigungsänderung des Kraftfahrzeuges (1) charakterisiert.

4.    Verfahren gemäß Anspruch 3, bei dem

- ein aktuelles Lageänderungssignal (Inc_act) erzeugt wird, das die aktuelle Lageänderung des Kraftfahrzeuges (1) wiedergibt.

5.    Verfahren gemäß Anspruch 4, bei dem

- ein Neigungsänderungssignal als das aktuelle Lageänderungssignal (Inc_act) erzeugt wird.

6. Verfahren gemäß Anspruch 4 oder 5, bei dem

- das aktuelle Lageänderungssignal (Inc_act) tiefpaßgefiltert wird.

7. Verfahren gemäß einem der Ansprüche 4 bis 6, bei dem

- das aktuelle Lageänderungssignal (Inc_act) oder das tiefpaßgefilterte aktuelle Lageänderungssignal (Inc_f_tp) hochpaßgefiltert wird.

8. Verfahren gemäß Anspruch 4 oder 5, bei dem

- das aktuelle Lageänderungssignal (Inc_act) bandpaßgefiltert wird.

9. Verfahren gemäß einem der Ansprüche 4 bis 8, bei dem

- das aktuelle Lageänderungssignal (Inc_act) oder eines der gefilterten aktuellen Lageänderungssignale (Inc_f_tp, Inc_f_hp, Inc_f_bp) differentiell gefiltert wird.

10. Verfahren gemäß einem der Ansprüche 6 bis 9, bei dem

- das Filtern rekursiv durchgeführt wird.

11. Vorrichtung zum Erkennen eines Stillstandszustandes eines Kraftfahrzeuges, mit:

- einer Lageänderungserkennungseinrichtung (8) zum Erfassen einer aktuellen Lageänderung eines Kraftfahrzeuges (1) und Erzeugen eines aktuellen Lageänderungssignales (Inc_act), und
- einer Rechnereinheit (10) zum Auswerten des aktuellen Lageänderungssignales (Inc_act) durch einen Vergleich wenigstens eines aus dem aktuellen Lageänderungssignal (Inc_act) ermittelten aktuellen Lageänderungsparameters mit wenigstens einem festgelegten Lageänderungsparameter, der Lageänderungen des Kraftfahrzeuges (1) definiert, die in einem Fahrzustand auftreten können, und zum Ausgeben eines Signales (stat_con, Dyn_con), das angibt, ob sich das Kraftfahrzeug (1) im Stillstand befindet oder nicht.

12. Vorrichtung gemäß Anspruch 10, bei dem

- die Lageänderungserkennungseinrichtung (8) einen Neigungssensor zur Bestimmung einer Neigungsänderung des Kraftfahrzeuges (1) um dessen Längs- und/oder Querachse umfaßt.

13. Vorrichtung gemäß Anspruch 11 oder 12, bei dem

- die Rechnereinheit (10) einen Tiefpaß (20) und/oder einen Hochpaß (22) umfaßt.

14. Vorrichtung gemäß Anspruch 11 oder 12, bei der

- die Rechnereinheit (10) einen Bandpaß (14) umfaßt.

15. Vorrichtung gemäß einem der Ansprüche 11 bis 14, bei der

- die Rechnereinheit (10) einen differentiellen Filter (24) umfaßt.

16. Vorrichtung gemäß einem der Ansprüche 13 bis 15, bei der

- der Tiefpaßfilter (20) und/oder der Hochpaßfilter (22) und/oder der differentielle Filter (24) unterschiedliche Abtastraten und/oder unterschiedliche Verstärkungsfaktoren aufweisen.

17. Verfahren zum Betrieb einer Bremsausrüstung eines Kraftfahrzeuges, die in einem Stillstandszustand des Kraftfahrzeuges selbständig Bremskräfte erzeugt, um das Kraftfahrzeug im Stillstand zu halten, bei dem zur Stillstandserkennung das Verfahren gemäß einem der Ansprüche 1 bis 10 verwendet wird.

18. Bremsausrüstung für ein Kraftfahrzeug, die für einen Stillstandszustand des Kraftfahrzeuges selbständig Bremskräfte erzeugt, um das Kraftfahrzeug im Stillstand zu halten, die zur Stillstandserkennung die Vorrichtung gemäß einem der Ansprüche 12 bis 16 umfaßt.

**Claims**

1. Method for recognizing a state of standstill of a motor vehicle, comprising the following steps:

   - specifying at least one change of position parameter which defines a change of position of a motor vehicle (1) that may occur in a travelling state;
   - detecting an actual change of position of the motor vehicle 81);
   - establishing at least one actual change of position parameter (Inc_act) characterizing the actual change of position;
   - comparing the at least one actual change of position parameter (Inc_act) with a corresponding one of the at least one specified change of position parameters in order to determine whether the at least one actual change of position parameter (Inc_act) characterizes a travelling state of the motor vehicle, and
   - generating a signal (Dyn_con) which reproduces a travelling state for the motor vehicle (1) if the at least one actual change of position parameter (Inc_act) characterizes a travelling state, or a signal (Stat_con) which reproduces a state of standstill of the motor vehicle (1) if the at least one actual change of position parameter (Inc_act) characterizes a state of the motor vehicle (1) that is not a travelling state.

2. Method according to claim 1, in which

   - at least one change of position parameter range is specified when specifying the at least one change of position parameter,
   - when comparing the at least one actual change of position parameter (Inc_act), a check is carried out as to whether the actual change of position parameter (Inc_act) lies in a corresponding one of the at least one specified change of position parameter ranges.

3. Method according to claim 1 or 2, in which

   - the at least one specified change of position parameter defines changes of inclination of the motor vehicle (1) about its longitudinal and/or transverse axis, and
   - the at least one actual change of position parameter (Inc_act) characterizes an actual change of inclination of the motor vehicle (1).

4. Method according to claim 3, in which

   - an actual change of position signal (Inc_act) is generated that reproduces the actual change of position of the motor vehicle (1).

5. Method according to claim 4, in which

   - a change of inclination signal is generated as the actual change of position signal (Inc_act).

6. Method according to claim 4 or 5, in which

   - the actual change of position signal (Inc_act) is low-pass filtered.

7. Method according to one of claims 4 to 6, in which

   - the actual change of position signal (Inc_act) or the low-pass filtered actual change of position signal (Inc_f_tp) is high-pass filtered.

8. Method according to claim 4 or 5, in which

- the actual change of position signal (Inc_act) is band-pass filtered.

9. Method according to one of claims 4 to 8, in which

- the actual change of position signal (Inc_act) or one of the filtered actual change of position signals (Inc_f_tp, Inc_f_hp, Inc_f_bp) is differentially filtered.

10. Method according to one of claims 6 to 9, in which

- filtering is carried out recursively.

11. Device for recognizing a state of standstill of a motor vehicle, comprising:

- a change of position recognition mechanism (8) for detecting an actual change of position of a motor vehicle (1) and generating an actual change of position signal (Inc_act), and
- a computer unit (10) for evaluating the actual change of position signal (Inc_act) by comparing at least one actual change of position parameter established from the actual change of position signal (Inc_act) with at least one specified change of position parameter which defines changes of position of the motor vehicle (1) that may occur in a travelling state, and for outputting a signal (Stat_con, Dyn_con) which indicates whether or not the motor vehicle (1) is at a standstill.

12. Device according to claim 10, in which

- the change of position recognition mechanism (8) comprises an inclination sensor for establishing a change of inclination of the motor vehicle (1) about its longitudinal and/or transverse axis.

13. Device according to claim 11 or 12, in which

- the computer unit (10) comprises a low-pass filter (20) and/or a high-pass filter (22).

14. Device according to claim 11 or 12, in which

- the computer unit (10) comprises a band-pass filter (14).

15. Device according to one of claims 11 to 14, in which

- the computer unit (10) comprises a differential filter (24).

16. Device according to one of claims 13 to 15, in which

- the low-pass filter (20) and/or the high-pass filter (22) and/or the differential filter (24) have different scanning rates and/or different amplification factors.

17. Method for operating braking equipment of a motor vehicle which equipment automatically produces braking forces when the motor vehicle is in a state of standstill in order to hold the motor vehicle at a standstill, this method employing the method according to one of claims 1 to 10 for standstill recognition.

18. Braking equipment for a motor vehicle which automatically produces braking forces for a state of standstill of the motor vehicle in order to hold the motor vehicle at a standstill, this equipment comprising the device according to one of claims 12 to 16 for standstill recognition.

**Revendications**

1. Procédé pour reconnaître lorsqu'un véhicule est à l'arrêt, comprenant les étapes suivantes :

- fixer au moins un paramètre de changement de position définissant un changement de position du véhicule (1) pouvant intervenir dans un état de circulation,

- saisir un changement actuel de position du véhicule (1),
- déterminer au moins un paramètre actuel de changement de position (Inc_act) caractérisant le changement actuel de position,
- comparer ledit paramètre actuel de changement de position (Inc_act) audit paramètre de changement de position fixé pour déterminer si ledit paramètre actuel de changement de position (Inc_act) caractérise un état de circulation pour le véhicule (1), et
- générer un signal (Dyn_con) indiquant un état de circulation pour le véhicule (1) lorsque ledit paramètre actuel de changement de position (Inc_act) caractérise un état de circulation, ou générer un signal (Stat_con) indiquant un état d'arrêt pour le véhicule (1) lorsque ledit paramètre actuel de changement de position (Inc_act) caractérise un état du véhicule (1) qui n'est pas un état de circulation.

2. Procédé selon la revendication 1, dans le cadre duquel

- il est, lors de la fixation dudit paramètre de changement de position, déterminé au moins une plage de paramètres de changement de position, et
- il est, lors de la comparaison dudit paramètre actuel de changement de position (Inc_act), vérifié si le paramètre actuel de changement de position (Inc_act) se situe dans ladite plage de paramètres de changement de position déterminée.

3. Procédé selon la revendication 1 ou 2, dans le cadre duquel

- ledit paramètre de changement de position fixé définit des changements d'inclinaison du véhicule (1) autour de son axe longitudinal et/ou de son axe transversal, et
- ledit paramètre actuel de changement de position (Inc_act) caractérise un changement actuel d'inclinaison du véhicule (1).

4. Procédé selon la revendication 3, dans le cadre duquel

- il est généré un signal actuel de changement de position (Inc_act) indiquant le changement actuel de la position du véhicule (1).

5. Procédé selon la revendication 4, dans le cadre duquel

- il est généré un signal de changement d'inclinaison en tant que signal actuel de changement de position (Inc_act).

6. Procédé selon la revendication 4 ou 5, dans le cadre duquel

- le signal actuel de changement de position (Inc_act) est filtré au moyen d'un filtre passe-bas.

7. Procédé selon l'une des revendications 4 à 6, dans le cadre duquel

- le signal actuel de changement de position (Inc_act) ou le signal actuel de changement de position filtré au moyen d'un filtre passe-bas (Inc_f_tp) est filtré au moyen d'un filtre passe-haut.

8. Procédé selon la revendication 4 ou 5, dans le cadre duquel

- le signal actuel de changement de position (Inc_act) est filtré au moyen d'un filtre passe-bande.

9. Procédé selon l'une des revendications 4 à 8, dans le cadre duquel

- le signal actuel de changement de position (Inc_act) ou un des signaux actuels de changement de position filtrés (Inc_f_tp, Inc_f_hp, Inc_f_bp) est filtré au moyen d'un filtre différentiel.

10. Procédé selon l'une des revendications 6 à 9, dans le cadre duquel

- le filtrage s'effectue à l'aide d'un filtre récursif.

**11.** Dispositif pour reconnaître lorsqu'un véhicule est à l'arrêt, comprenant :

- un dispositif de reconnaissance de changement de position (8) servant à saisir un changement actuel de la position du véhicule (1) et à générer un signal actuel de changement de position (Inc_act), et
- une unité de calcul (10) servant à évaluer le signal actuel de changement de position (Inc-act) par comparaison d'au moins un paramètre actuel de changement de position déterminé à partir du signal actuel de changement de position (Inc_act) à au moins un paramètre de changement de position fixé définissant des changements de position du véhicule pouvant intervenir dans un état de circulation, et servant à fournir un signal (Stat_con, Dyn_con) qui indique si le véhicule (1) se trouve ou non à l'arrêt.

**12.** Dispositif selon la revendication 10, dans le cadre duquel

- le dispositif de reconnaissance de changement de position (8) comprend un capteur d'inclinaison servant à détecter un changement d'inclinaison du véhicule (1) autour de son axe longitudinal et/ou de son axe transversal.

**13.** Dispositif selon la revendication 11 ou 12, dans le cadre duquel

- l'unité de calcul (10) comprend un filtre passe-bas (20) et/ou un filtre passe-haut (22).

**14.** Dispositif selon la revendication 11 ou 12, dans le cadre duquel

- l'unité de calcul (10) comprend un filtre passe-bande (14).

**15.** Dispositif selon l'une des revendications 11 à 14, dans le cadre duquel

- l'unité de calcul (10) comprend un filtre différentiel (24).

**16.** Dispositif selon l'une des revendications 13 à 15, dans le cadre duquel

- le filtre passe-bas (20) et/ou le filtre passe-haut (22) et/ou le filtre différentiel (24) présentent différentes fréquences d'échantillonnage et/ou différents facteurs d'amplification.

**17.** Procédé servant à faire fonctionner l'équipement de freinage d'un véhicule qui, lorsque le véhicule est à l'arrêt, génère des forces de freinage indépendamment d'un actionnement du conducteur afin de maintenir le véhicule à l'arrêt, dans le cadre duquel
il est utilisé le procédé selon l'une des revendications 1 à 10 pour reconnaître lorsqu'un véhicule est à l'arrêt.

**18.** Equipement de freinage destiné à un véhicule, qui, lorsque le véhicule est à l'arrêt, génère des forces de freinage indépendamment d'un actionnement du conducteur afin de maintenir le véhicule à l'arrêt et comprend le dispositif selon l'une des revendications 12 à 16 servant à reconnaître lorsque le véhicule est à l'arrêt.

Fig. 1

Fig. 2

Fig. 3

Fig. 4

12    10    18

8 — 14 — 24 — 16 —

Fig. 5

12    10    18

8 — 20 — 22 — 24 — 16 —